# EUROPÄISCHE PATENTSCHRIFT

(11) **EP 3 700 701 B1**
(45) Veröffentlichungstag und Bekanntmachung des Hinweises auf die Patenterteilung: **16.10.2024**
(21) Anmeldenummer: 18808339.8
(22) Anmeldetag: 26.11.2018
(51) Int. Cl.: B23D 33/00, B23D 25/12, B23Q 11/10, B26D 7/10

(54) **VORRICHTUNG UND VERFAHREN ZUM KÜHLEN EINER QUERTEILSCHERE IN WARMBANDSTRASSEN**
APPARATUS AND METHOD FOR COOLING A CUT TO LENGTH SHEAR IN A HOT STRIP MILL
DISPOSITIF ET PROCÉDÉ DE REFROIDISSEMENT D'UNE CISAILLE TRANSVERSALE DANS UN TRAIN À FEUILLARDS À CHAUD

(30) Priorität: 04.12.2017 DE 102017221764
(43) Veröffentlichungstag der Anmeldung: 02.09.2020
(73) Patentinhaber: SMS group GmbH, 41069 Mönchengladbach (DE)
(72) Erfinder: FREUND, Oliver Larsen, 57258 Freudenberg-Bühl (DE); EHLS, Bernhard, 57271 Hilchenbach (DE)
(74) Vertreter: Kross, Ulrich
(86) Internationale Anmeldenummer: PCT/EP2018/082494
(87) Internationale Veröffentlichungsnummer: WO 2019/110342

(56) Entgegenhaltungen:
- EP-B1- 2 768 622
- EP-B1- 3 509 768
- DE-A1- 10 357 272
- JP-A- 2009 125 787
- JP-A- 2010 099 687
- JP-U- S59 109 422
- KR-A- 20140 006 654
- KR-A- 20140 006 654

## Beschreibung

Die Erfindung betrifft eine Vorrichtung zum Kühlen zumindest eines messertragenden Elements einer Querteilschere, die in einem Walzwerk, insbesondere in einem Warmwalzwerk installiert ist, und ein entsprechendes Kühlverfahren.

Scheren zum Querteilen von Walzband beispielsweise in einem Warmwalzwerk sind allgemein bekannt. Solche Scheren können als Trommelscheren ausgebildet sein, wie z.B. in DE 199 53 906 A1 oder DE 100 01 928 A1 beschrieben. Andere Scherentypen sind beispielsweise Torscheren, Kurbelscheren, etc.

Wenn eine Schere nicht schneidet, dann befindet sie sich im Stillstand. Hierbei läuft das Walzband durch die Schere hindurch und heizt die an das Walzband angrenzenden Bereiche der Schere auf. Insbesondere die untere Seite des oberen messertragenden Elements wird durch das Walzband einer starken Hitze bzw. Erwärmung ausgesetzt. Dadurch entstehen unerwünschte Spannungen in dem oberen messertragenden Element, und in gleicher Weise auch in dem unteren messertragenden Element.

Fig. 11 zeigt eine Vorderansicht einer Trommelschere 103 gemäß dem Stand der Technik, die aus CN 201271813Y bekannt ist. Hierin ist zu erkennen, dass ein Walzband 101 in einer Transportrichtung T zwischen einer oberen Messertrommel 102.1 und einer nicht dargestellten unteren Messertrommel hindurchläuft. Oberhalb der oberen Messertrommel 102.1 eine Kühlmittelzufuhreinrichtung 114 angeordnet, aus der Kühlwasser durch eine Spritzdüse 14 nach unten auf die obere Messertrommel 102.1 gesprüht wird. Dabei kann wahlweise die Oberfläche der Trommel selbst oder auch die Oberfläche der Messer M selbst gekühlt werden. Nachteilig hierbei ist, dass das ausgebrachte Kühlwasser danach auch auf eine Oberfläche des Walzbandes 101 gelangt und zu dessen Abkühlung führt.

Zum Kühlen von Messertrommeln einer Trommelschere ist es auch bekannt, dass - wenn sich die Trommelschere im Stillstand befindet - deren Messertrommeln zumindest teilweise aus der Walzlinie herausgedreht und mit aus Sprühbalken ausgebrachtem Wasser gekühlt werden. Gleichwohl ist bei einer Trommelschere, die entlang des Umfangs ihrer Messertrommeln mit jeweils drei Messern bestückt ist, ein Herausdrehen von deren Messertrommeln aus dem Strahlungsbereich des Walzbandes nicht möglich, weil es dann zu einem ungewollten Schnitt des Walzbandes kommen würde. Außerdem würde hierbei Kühlwasser auf das Walzband gelangen, was einen nachteiligen Wärmeverlust zur Folge hätte.

Des Weiteren ist es zur Kühlung der Messertrommeln einer Trommelschere denkbar, Kühlbohrungen in die Messertrommeln einzubringen. Dies ist z.B. aus RU 22 27 086 C2 bekannt. Jedoch ist dies bei Trommelscheren mit drei Messern (pro Messertrommel) problematisch, weil es dann zu "Bohrungskollisionen" mit anderen Bohrungen bzw. Kanälen kommen kann, die zum Spannen der Messer benötigt werden. Hinzu tritt, dass eine Realisierung einer solchen Innenkühlung fertigungstechnisch aufwendig, und damit kostenintensiv ist. Ungeachtet dessen ist auch problematisch, dass eine Innenkühlung einer Messertrommel das Spannungsniveau, das durch die Erwärmung bedingt durch das angrenzende Walzband entsteht, nicht ausreichend reduzieren kann. Dies ist von der Anmelderin der vorliegenden Erfindung in entsprechenden FEM-Berechnungen festgestellt worden.

Vergleichbare Nachteile sind für andere Scherentypen, z.B. Torscheren oder Kurbelscheren gleichermaßen bekannt.

Aus JP 2009 125787 A sind eine Vorrichtung mit den Merkmalen des Oberbegriffs von Anspruch 1 und ein Kühlverfahren mit den Merkmalen des Oberbegriffs von Anspruch 13 bekannt. Die Vorrichtung gemäß JP 2009 125787 A sieht für das Bewegen einer Schutzeinrichtung zwischen einer Kühlstellung und einer Schnittstellung einen Gelenkmechanismus mit einer Kreisbahn vor, womit die Schutzeinrichtung lediglich entlang einer Kreisbahn bewegt werden kann. Hierdurch kann die Schutzeinrichtung an einer Messertrommel mit zwei Messern herumfahren, wenn ein Messer dieser Messertrommel in der Kühlstellung eine Position von 90° zur Vertikalen einnimmt

Entsprechend liegt der Erfindung die Aufgabe zugrunde, die Kühlung für ein messertragendes Element einer Querteilschere mit einfachen Mitteln zu optimieren, bevorzugt bei einer Trommelschere, deren Messertrommeln jeweils mit drei Messern bestückt sind.

Die obige Aufgabe wird durch eine Vorrichtung mit den in Anspruch 1 angegebenen Merkmalen, und durch ein Verfahren gemäß Anspruch 13 gelöst. Vorteilhafte Weiterbildungen der Erfindung sind in den abhängigen Ansprüchen definiert.

Eine Vorrichtung nach der vorliegenden Erfindung dient zum Kühlen zumindest eines messertragenden Elements einer Querteilschere, die in einem Walzwerk, z.B. in einem Warmwalzwerk, installiert ist. Im Einzelnen umfasst diese Vorrichtung zumindest eine Schutzeinrichtung, und eine Führungseinrichtung, an der die Schutzeinrichtung beweglich geführt und dadurch zwischen einer Kühlposition und einer Schnittposition verfahren werden kann. Die Schutzeinrichtung ist in der Kühlposition zwischen einem messertragenden Element der Querteilschere und einem kontinuierlich durch das Walzwerk laufenden Walzband positioniert, derart, dass eine dem Walzband gegenüberliegende Seite dem messertragenden Element durch die Schutzeinrichtung abgeschirmt ist. In der Schnittposition ist die Schutzeinrichtung von einem Bewegungsfeld des Messers beabstandet. Im Falle einer Trommelschere liegt sie außerhalb des Messerkreises, so dass bei Rotation der Messertrommel bzw. beim Durchtrennen des Walzbandes die Schutzeinrichtung von dieser Messertrommel nicht berührt wird. Die Führungseinrichtung für die Schutzeinrichtung ist in Form von Kulissenführungen ausgebildet, die beiderseits des Walzbandes angeordnet sind, wobei die Schutzeinrichtung mit ihren beiden Stirnseiten an den Kulissenführungen beweglich geführt ist, wobei die Kulissenführungen an den Innenseiten der seitlichen Ständergerüste der Querteilschere angebracht sind. In den Kulissenführungen sind jeweils eine erste bogenförmige Führungskulisse und eine zweite bogenförmige Führungskulisse ausgebildet, wobei eine Bahnkurve, die durch die bogenförmigen Führungskulissen definiert wird, in Bezug auf eine angrenzende Messertrommel konvex nach außen weist, wobei die Führungskulissen in einer Kulissenführung teilweise überlappend angeordnet sind.

In gleicher Weise sieht die Erfindung auch ein Verfahren zum Kühlen zumindest eines messertragenden Elements einer Querteilschere vor, die in einem Walzwerk, insbesondere in einem Warmwalzwerk installiert ist. Hierbei wird im Stillstand der Schere zumindest eine Schutzeinrichtung zwischen einem messertragenden Element der Schere und einem kontinuierlich durch das Walzwerk laufenden Walzband in einer Kühlposition positioniert, mit der Folge, dass eine dem Walzband gegenüberliegende Seite dieses messertragenden Elements durch die Schutzeinrichtung abgeschirmt ist. Die Schutzeinrichtung ist zweiteilig ausgebildet und umfasst zwei Abschirmelemente, die von der Einlaufseite des Walzbandes und von der Auslaufseite des Walzbandes spiegelbildlich in die Kühlposition gebracht werden, in der die Abschirmelemente angrenzend zueinander positioniert sind und dadurch eine Unterseite des oberen messertragenden Elements gegenüber dem Walzband abschirmen. Die Schutzeinrichtung ist zwischen einem oberen messertragenden Element der Querteilschere und dem kontinuierlich durch das Walzwerk laufenden Walzband positioniert wird. Die Abschirmelemente weisen jeweils einen Wannenbereich, wobei - wenn sich die Abschirmelemente in der Kühlposition befinden - Kühlwasser in diese Wannenbereiche eingeleitet wird. Solange sich die Abschirmelemente in der Kühlposition befinden, wird Kühlwasser permanent in die Wannenbereiche der Abschirmelemente eingeleitet, wobei das Kühlwasser - wenn die Wannenbereiche voll mit Kühlwasser geflutet sind - über Seitenränder der Wannenbereiche überläuft und nach unten an dem Walzband seitlich vorbeiströmt. Der Erfindung liegt die wesentliche Erkenntnis zugrunde, dass die Kühlung eines messertragenden Elements einer Querteilschere bereits dadurch bewirkt wird, dass in den Raum bzw. Spalt zwischen dem durchlaufenden Walzband und dem daran angrenzenden messertragenden Element - in der Kühlposition - die zumindest eine Schutzrichtung eingebracht ist bzw. wird, mit der dann die Seite des messertragenden Elements, welche an das heiße Walzband angrenzt, körperlich abgeschirmt wird. Die Verwendung von Kühlwasser ist hierbei nicht unbedingt erforderlich. In Folge dieser Positionierung der Schutzeinrichtung ist das messertragende Element gegenüber einer direkten Wärmestrahlung des Walzbandes abgeschirmt bzw. geschützt, so dass eine Erwärmung des messertragenden Elements und das hieraus resultierende Spannungsniveau reduziert wird.

Zweckmäßigerweise kann die Schutzeinrichtung in der Kühlposition zwischen dem oberen messertragenden Element und dem kontinuierlich durch das Walzwerk laufenden Walzband positioniert sein. Entsprechend wird die untere Seite des oberen messertragenden Elements gegenüber dem Walzband mit Hilfe der Schutzeinrichtung abgeschirmt. Anders ausgedrückt, ist die Unterseite des oberen messertragenden Elements, wenn die Schutzeinrichtung in die Kühlposition verfahren ist, der Wärmestrahlung des Walzbandes nicht mehr unmittelbar ausgesetzt.

Eine weiter verbesserte Kühlung kann dadurch erreicht werden, dass die Schutzeinrichtung einen Wannenbereich aufweist, in den - wenn sich die Schutzeinrichtung in der Kühlposition befindet - Kühlwasser eingebracht wird. Dies bewirkt eine zusätzliche Kühlung der Schutzeinrichtung per se, wodurch auch eine Wärmestrahlung in Richtung der oberen Messertrommel vermindert wird. Die Kühlung der Schutzeinrichtung kann weiter dadurch optimiert werden, wenn das Kühlwasser in deren Wannenbereich permanent bzw. zirkulierend eingebracht wird. Dies bedeutet, dass, nachdem der Wannenbereich vollständig mit Kühlwasser geflutet ist, dann anschließend das Kühlwasser aus dem Wannenbereich seitlich abläuft und an dem Walzband seitlich vorbei nach unten wegströmt und anschließend geeignet aufgefangen wird.

Im Unterschied zu herkömmlichen Kühlkonzepten wird mit der vorliegenden Erfindung erreicht, dass im Zusammenhang mit der Kühlung eines messertragenden Elements einer Querteilschere Kühlwasser nicht auf das Walzband gelangt, und ggf. auch nicht erforderlich ist. Falls der Wannenbereich der Schutzeinrichtung, mit welcher in der Kühlposition die Unterseite des oberen messertragenden Elements abgeschirmt wird, zusätzlich mit Kühlwasser gefüllt wird, so wird das überlaufene Kühlwasser, wie erläutert, geeignet seitlich an dem Walzband vorbeigeführt und gelangt somit nicht auf die Oberfläche des Walzbandes. Dadurch reduzieren sich Wärmeverluste bzw. Kosten, um ansonsten das Walzband wieder aufzuheizen zu müssen.

Im Unterschied zu herkömmlichen Kühlkonzepten wird mit der vorliegenden Erfindung erreicht, dass durch die Abschirmung des messertragenden Elements der Querteilschere die gesamte Temperatur auf niedrigerem Niveau verbleibt und somit eine Temperaturdifferenz zwischen walzbandnahen Bereichen und walzbandfernen Bereichen des messertragenden Elements so klein wie möglich gehalten wird. Damit werden bereits ohne Aufbringung von Kühlwasser die internen Spannungen weitgehend reduziert. Wird zusätzlich Kühlwasser auf das messertragende Element und/oder die Abschirmung aufgebracht, so entstehen keinerlei schädliche interne Spannungen innerhalb des messertragenden Elements bedingt durch die zusätzliche Kühlung. Somit ermöglicht diese Abschirmung mit einer Installation zwei vorteilhafte Effekte.

Ergänzend kann vorgesehen sein, dass in der Kühlposition, d.h. im Stillstand der Querteilschere, eine weitere Schutzeinrichtung auch zwischen dem Walzband und dem unteren messertragenden Element positioniert ist. Dies führt in gleicher Weise wie bei dem oberen messertragenden Element zu einer Abschirmung des unteren messertragenden Elements gegenüber dem Walzband und dessen Wärmestrahlung, so dass dadurch eine gewünschte Kühlung für das untere messertragende Element erreicht wird.

Die Führungseinrichtung, an der die zumindest eine Schutzeinrichtung beweglich geführt ist, dient dazu, die Schutzeinrichtung in eine Kühlposition, wenn sich die Schere im Stillstand befindet, und in eine Schnittposition, wenn die Messer der Schere in Bewegung versetzt werden und das Walzband entsprechend durchtrennt wird, zu bewegen. Die Führungseinrichtung bewirkt eine Bewegung der Schutzeinrichtung(en) in der Weise, dass es beim Überführen bzw. Verschwenken der Schutzeinrichtung(en) von der Kühlposition in die Schnittposition zu keinem Zeitpunkt zu einer Überschneidung mit dem Bewegungsfeld des messertragenden Elements kommt. Dies bedeutet, dass die Schutzeinrichtung sowohl nach Erreichen der Schnittposition als auch auf dem Weg dorthin das messertragende Element nicht berührt. Dies kann beispielsweise dadurch erreicht werden, dass die Schutzeinrichtung von der Führungseinrichtung zwischen der Kühlposition und der Schnittposition entlang einer geeigneten Bahnkurve, bzw. -linie bewegt wird. Hierdurch ist die Schutzeinrichtung, nachdem sie die Schnittposition erreicht hat, auch ausreichend weit von dem messertragenden Element beabstandet, so dass ggf. umherfliegende Bandstücke, die beim Schneiden/ Durchtrennen und Häckseln des Walzbandes entstehen können, die Schutzeinrichtung nicht berühren bzw. beschädigen.

Die Vorrichtung ist hinsichtlich ihrer zumindest einen Schutzeinrichtung und der zugeordneten Führungseinrichtung derart konstruiert, dass für die Schutzeinrichtung sowohl ein Einschwenken in die Kühlposition als auch ein Ausschwenken in die Schnittposition möglich ist, ohne dass dabei die Schutzeinrichtung ein angrenzendes messertragendes Element berührt bzw. dessen Bewegungsfeld tangiert. Zu diesem Zweck ist es besonders im Fall von Trommelscheren von Vorteil, wenn die Schutzeinrichtung zweiteilig ausgebildet ist, nämlich in Form von zwei Abschirmelementen, die - von der Einlaufseite des Walzbandes in die Trommelschere hinein bzw. von der Auslaufseite des Walzbandes aus der Trommelschere heraus - beim Überführen in die Kühlposition spiegelbildlich in diese Ein- bzw. Auslaufseite aufeinander zu bewegt werden. Nach Erreichen der Kühlposition sind dann die beiden Abschirmelemente angrenzend zueinander positioniert, so dass sie eine dem Walzband gegenüberliegende Seite einer Messertrommel vollständig gegen das Walzband abschirmen. Beim Überführen in die Schnittposition werden die beiden Abschirmelemente aus der Ein- bzw. Auslaufseite der Trommelschere heraus bewegt, und gelangen dann nach Erreichen der Schnittposition in eine "Parkstellung", in der sie ausreichend weit von einer angrenzenden Messertrommel beabstandet sind.

Zum Bewegen einer Schutzeinrichtung, beispielsweise in Form der zuletzt genannten Abschirmelemente, zwischen der Kühlposition und der Schnittposition kann pro Seite (d.h. an der Einlaufseite und an der Auslaufseite der Schere) jeweils ein Elektromotor oder ein Hydraulikzylinder zum Einsatz kommen, ggf. unter Verwendung eines Viergelenk- oder Mehrgelenkgetriebes, durch das ein Abschirmelement mit dem Antrieb (z.B. Elektromotor oder Hydraulikzylinder) wirkverbunden bzw. gekoppelt ist.

Die Vorrichtung nach der vorliegenden Erfindung zeichnet sich durch einen modularen Aufbau ihrer Komponenten aus. Entsprechend kann diese Vorrichtung einfach gewartet, montiert oder demontiert werden. Des Weiteren ist dank dieses modularen Aufbaus für bereits bestehende Scheren auch ein Nachrüsten mit der erfindungsgemäßen Vorrichtung möglich.

Unter Querteilung im Sinne der oben beschriebenen Erfindung wird sowohl das Schopfen eines Bandanfangs- oder Bandendes verstanden, als auch die Unterteilung des Bandes in Abschnitte definierter Länge durch Querteilen oder Häckseln.

Unter messertragenden Elementen im Sinne der Erfindung werden diejenigen Komponenten der Schere verstanden, die die Schneidmesserblätter als solche aufnehmen. Damit sind somit beispielsweise die Messertrommeln einer Trommelschere oder die Messerhalter einer Torschere, etc. gemeint.

Unter Bewegungsfeld im Sinne der Erfindung wird derjenige Bereich verstanden, den ein Messer mit seinem messertragenden Element während der Schneidbewegung selbst durchläuft. Im Beispiel einer Trommelschere ist das Bewegungsfeld kreisförmig

Nachstehend ist eine Ausführungsform der Erfindung, am Beispiel einer Trommelscherenanordnung anhand einer schematisch vereinfachten Zeichnung im Detail beschrieben.

Es zeigen:
- Fig. 1: eine Perspektivansicht einer erfindungsgemäßen Vorrichtung,
- Fig. 2: eine Vorderansicht der Vorrichtung von Fig. 1,
- Fig. 3: eine Teil-Perspektivansicht der Vorrichtung von Fig. 1, entlang der Schnittführung entlang der Linie A-A von Fig. 2 in einer Kühlposition,
- Fig. 4: eine Teil-Perspektivansicht der Vorrichtung von Fig. 1, entlang der Schnittführung entlang der Linie A-A von Fig. 2, in einer Schnittposition,
- Fig. 5: eine Perspektivansicht einer Kulissenführung, die Teil der Vorrichtung von Fig. 1 ist,
- Fig. 6: eine Perspektivansicht einer wannenförmigen Abdeckung, die Teil der Vorrichtung von Fig. 1 ist,
- Fig. 7: eine Perspektivansicht von Teilen der Vorrichtung von Fig. 1, umfassend jeweils vier Kulissenführungen gemäß Fig. 5, und zwei dazwischen angeordneten wannenförmigen Abdeckungen gemäß Fig. 6,
- Fig. 8-10: Stirnseitenansichten auf die Vorrichtung von Fig. 1 entlang der Linie A-A von Fig. 2, jeweils in verschiedenen Betriebspositionen, und
- Fig. 11: eine Vorderansicht einer Trommelschere gemäß dem Stand der Technik.

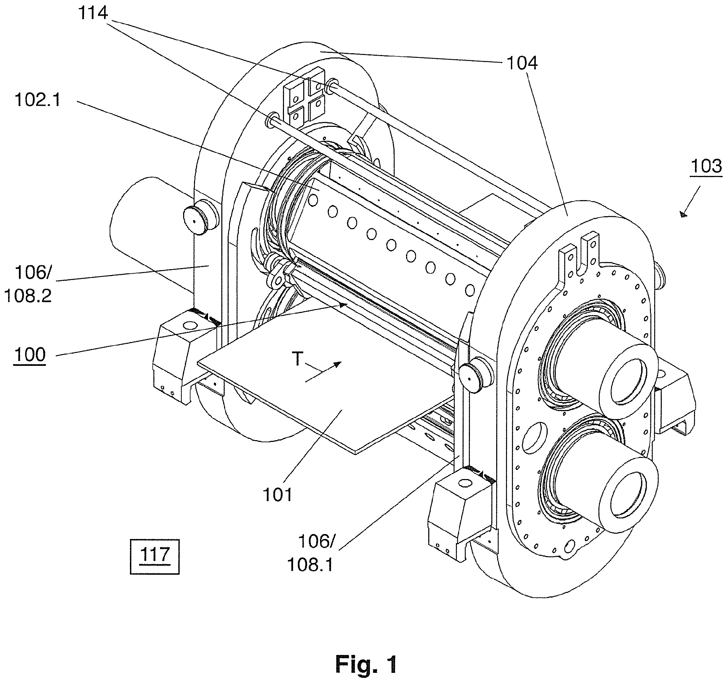

Nachstehend sind unter Bezugnahme auf die Fig. 1 bis 10 eine bevorzugte Ausführungsform einer erfindungsgemäßen Vorrichtung 100 und deren Komponenten erläutert, die zum Kühlen von zumindest einer Messertrommel einer Trommelschere 103 dient. An dieser Stelle darf darauf hingewiesen werden, dass gleiche Merkmale in der Zeichnung jeweils mit gleichen Bezugszeichen versehen sind. Die Zeichnung ist lediglich vereinfacht und insbesondere ohne Maßstab dargestellt.

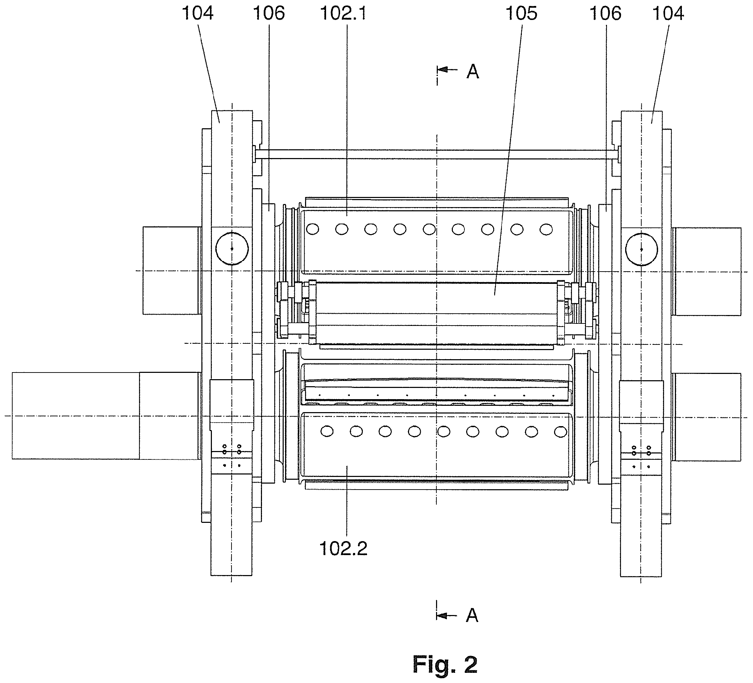

Fig. 1 zeigt eine Trommelschere 103 in einer Perspektivansicht, wobei diese Trommelschere 103 in Fig. 2 in einer Vorderansicht gezeigt ist. Ein Walzband 101 läuft zwischen einer oberen Messertrommel, welches als messertragendes Element dient 102.1 und einer unteren Messertrommel als messertragendem Element 102.2 durch die Trommelschere 103 hindurch. In bekannter Weise befinden sich diese Messertrommeln 102.1, 102.2 im Stillstand, wenn mit der Trommelschere 103 kein Schneidvorgang zum Durchtrennen des Walzbandes 101 durchgeführt wird.

Die Trommelschere 103 von Fig. 1 kann mit einer erfindungsgemäßen Vorrichtung 100 ausgerüstet sein, mit der insbesondere die obere Messertrommel 102.1 der Trommelschere 103 gekühlt wird, wenn die Trommelschere 103 sich im Stillstand befindet. Diese Vorrichtung 100 wird nun hinsichtlich ihrer Funktionsweise und der zugehörigen Komponenten im Detail erläutert.

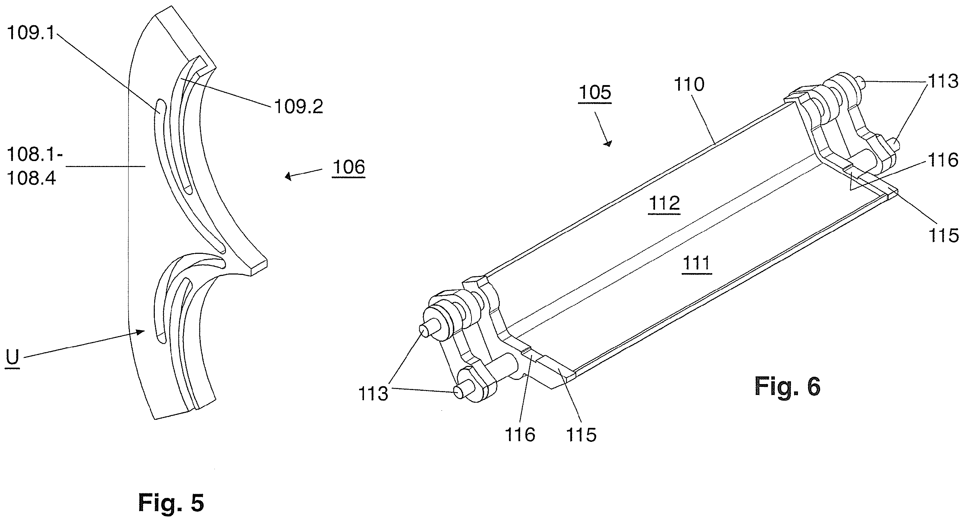

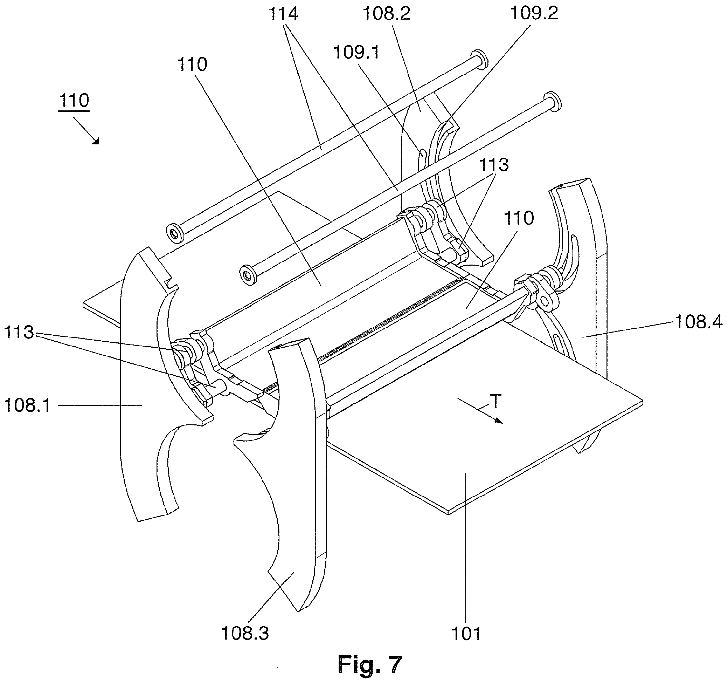

Die Vorrichtung umfasst zumindest eine Schutzeinrichtung 105 (vgl. Fig. 2), die sich mindestens über die gesamte Breite des Walzbandes 101 (vgl. Fig. 1) erstreckt und mittels einer Führungseinrichtung 106 zwischen den seitlichen Ständergerüsten 104 der Trommelschere 103 beweglich geführt ist. Im Einzelnen umfasst die Führungseinrichtung 106 vier Kulissenführungen 108.1-108.4 (vgl. Fig. 7), die jeweils an einer Innenseite der Ständergerüste 104 befestigt sind. Die Perspektivansicht von Fig. 5 verdeutlicht, dass in einer Oberfläche einer Kulissenführung 108.1-108.4 jeweils eine erste bogenförmige Führungskulisse 109.1 und eine zweite bogenförmige Führungskulisse 109.2 ausgebildet sind, wobei sich diese Führungskulissen 109.1, 109.2 teilweise überlappen.

Die Schutzeinrichtung 105 ist zweiteilig ausgebildet, und umfasst zwei Abschirmelemente 110, von denen eines perspektivisch in der Fig. 6 gezeigt ist. Ein Abschirmelement 110 umfasst einen Wannenbereich 111 und einen Wandbereich 112. In einem Querschnitt längs zur Breite des Walzbandes 101 ist der Wandbereich 112 in einem Winkel relativ zum Wannenbereich 111 angeordnet. Die Bedeutung dieser gewinkelten Anordnung des Wandbereichs 112 relativ zum Wannenbereich 111 wird nachstehend noch gesondert erläutert.

An Seitenrändern 115 des Abschirmelements 110 sind angrenzend sowohl zum Wannenbereich 111 als auch zum Wandbereich 112 jeweils Führungszapfen 113 angebracht. Bei einer Montage eines Abschirmelements 110 an zwei gegenüberliegend zueinander angeordneten Kulissenführungen werden diese Führungszapfen 113 in Eingriff mit den genannten Führungskulissen 109.1, 109.2 gebracht, die in einer jeweiligen Kulissenführung 108.1 - 108.4 ausgebildet sind. Entsprechend ist ein Abschirmelement 110 entlang dieser Führungskulissen 109.1, 109.2 verschwenkbar, was nachstehend noch erläutert ist.

In der Fig. 7 ist die Vorrichtung 100 mit ihren wesentlichen Funktionselementen perspektivisch gezeigt, zur Vereinfachung ohne die Trommelschere 103. Zwischen den einander gegenüberliegenden Kulissenführungen 108.1, 108.2 - im Bildbereich links - ist ein Abschirmelement 110 angeordnet, wobei die seitlichen Führungszapfen 113 des Abschirmelements 110 sich in Eingriff mit den Führungskulissen 109.1, 109.2 der jeweiligen Kulissenführungen 108.1, 108.2 befinden. In Zusammenschau mit der Trommelschere von Fig. 1 sind die Kulissenführungen 108.1 und 108.2 jeweils im Einlaufbereich der Trommelschere 103 vorgesehen, d.h. im Bildbereich von Fig. 1 jeweils links von der oberen Messertrommel 102.1. In gleicher Weise ist zwischen den einander gegenüberliegenden Kulissenführung 108.3, 108.4 - im Bildbereich von Fig. 7 und Fig. 1 jeweils rechts - ein weiteres Abschirmelement 110 angeordnet, dessen seitliche Führungszapfen 113 ebenfalls in die Führungskulissen 109.1, 109.2 der Kulissenführungen 108.3, 108.4 eingreifen.

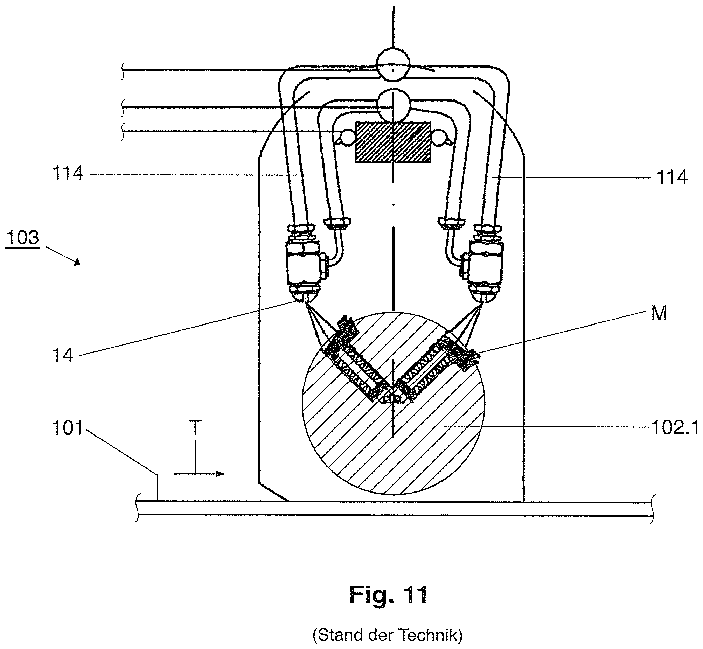

Die Fig. 7 verdeutlicht den modularen Aufbau der erfindungsgemäßen Vorrichtung 100. Auf Grundlage dessen ist es möglich, eine bereits vorhandene Trommelschere 103, wie sie z.B. in den Fig. 1 und 11 gezeigt ist, mit der erfindungsgemäßen Vorrichtung 100 nachzurüsten, wobei die Messertrommeln 102.1, 102.2 keiner Modifikation bedürfen. Bezüglich der Kulissenführungen 108.1-108.4 darf darauf hingewiesen werden, dass diese jeweils an den Innenseiten der Ständergerüste 104 der Trommelschere 103 geeignet befestigt werden können, ggf. auch im Wege eines Nachrüstens.

Eine Zusammenschau der Fig. 7 z.B. mit Fig. 1 verdeutlicht, dass die Schutzeinrichtung 105 bzw. deren Abschirmelemente 110 breiter ist/sind als das Walzband 101.

### Die Erfindung funktioniert nun wie folgt:

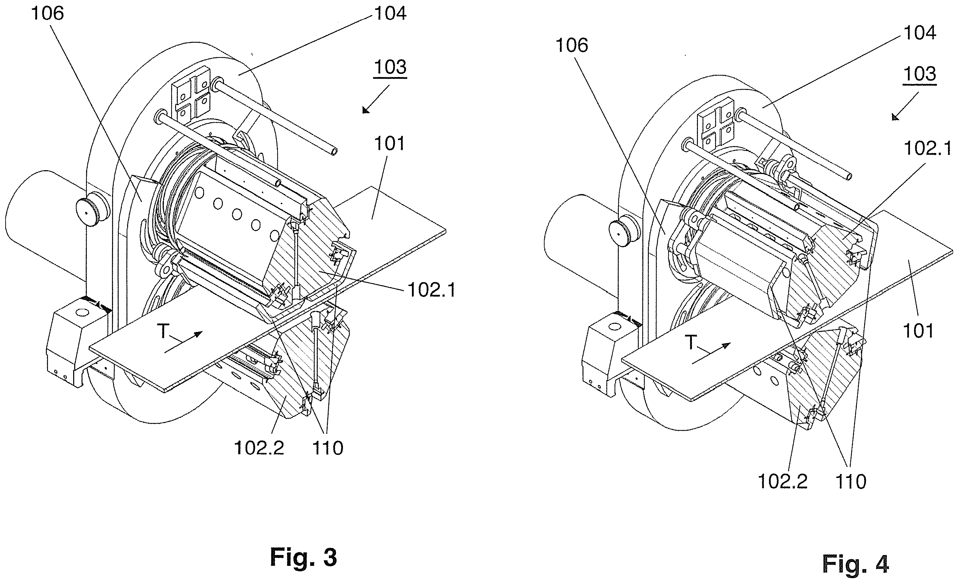

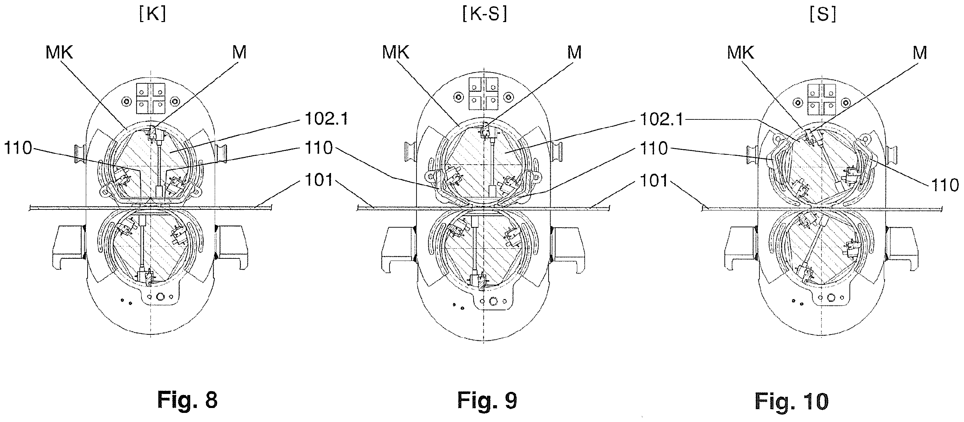

Falls die Trommelschere 103 sich im Stillstand befindet und entsprechend deren Messertrommeln 102.1, 102.2. nicht rotieren, werden die Abschirmelemente 110 entlang der Führungskulissen 109.1, 109.2 der jeweiligen Kulissenführungen 108.1 - 108.4 in eine Kühlposition verschwenkt. Dies entspricht der Darstellung der Abschirmelemente 110 in der Fig. 7, und auch der Stirnseitenansicht von Fig. 8, die eine Schnittansicht entlang der Linie A-A von Fig. 2 zeigt. Entsprechend dieser Kühlposition ist die Darstellung von Fig. 8 mit "[K]" überschrieben. Zur weiteren Veranschaulichung dieser Kühlposition wird auch auf die Perspektivansicht von Fig. 3 verwiesen, die ebenfalls eine Schnittführung entlang der Linie A-A von Fig. 2zeigt.

Bezüglich der Kühlposition [K] ist zu verstehen, dass dabei die Abschirmelemente 110 zwischen der oberen Messertrommel 102.1 und dem Walzband 101 positioniert sind. Somit ist die Unterseite der oberen Messertrommel 102.1 von den beiden Abschirmelementen 110 gegenüber dem Walzband 101 abgeschirmt, so dass eine Wärmestrahlung des Walzbandes 101 nicht unmittelbar auf die Unterseite der oberen Messertrommel 102.1 einwirken kann.

Die Vorrichtung 100 umfasst des Weiteren eine Kühlmittelzufuhreinrichtung 114 in Form von Sprühbalken, die zwischen den Ständergerüsten 104 der Trommelschere 103 angeordnet sind (vgl. Fig. 1). Aus diesen Sprühbalken 114 wird, wenn die Abschirmelemente 110 in die Kühlposition verschwenkt sind, Kühlwasser gegen die Innenflächen der Wandbereiche 112 gesprüht, wobei das Kühlwasser anschließend mit verminderter Strömungsgeschwindigkeit hinein in die Wannenbereiche 111 der Abschirmelemente 110 gelangt. Insoweit fungieren die Wandbereiche 112 jeweils als "Prallblech", um das von den Sprühbalken 114 ausgebrachte Kühlwasser mit beruhigter Strömung in die Wannenbereiche 111 der Abschirmelemente 110 einzuleiten. Zu diesem Zweck sind die Wandbereiche 112 relativ zu den Wannenbereichen 111 auch gewinkelt angeordnet, wie es im Zusammenhang mit der Fig. 7 bereits erläutert worden ist.

Die Wannenbereiche 111 können - ihrer Bezeichnung entsprechend - ein bestimmtes Volumen von Kühlwasser aufnehmen. Somit werden die beiden Abschirmelemente 110 gekühlt, und heizen sich durch die von dem Walzband 101 ausgehende Wärmestrahlung weniger auf. Mittelbar bedeutet dies auch, dass sich dann die obere Messertrommel 102.1 im Stillstand der Trommelschere 103 auch weniger erwärmt.

Ausweislich der Darstellung von Figur 6 sind an den Seitenrändern 115 der Abschirmelemente 110, angrenzend zum Wannenbereich 111, jeweils Ausflussöffnungen 116 ausgebildet, z.B. in Form von Vertiefungen am Rand des Wannenbereichs. Ergänzend und/oder alternativ hierzu kann vorgesehen sein, dass der Wannenbereich 111 angrenzend zu den Seitenrändern 115 jeweils mit Bohrungen durchsetzt ist. Jedenfalls wird durch diese Ausflussöffnungen 116 bzw. Bohrungen bewirkt, dass - nachdem der Wannenbereich 111 komplett mit Kühlwasser "geflutet" bzw. vollgelaufen ist - dann das Kühlwasser aus den Wannenbereichen 111 seitlich austreten kann und an dem Walzband 101 seitlich vorbei nach unten fällt und dort geeignet entsorgt wird, z.B. durch eine (nicht gezeigte) Schrottrutsche. Demnach wird, wenn sich die Abschirmelemente 110 in der Kühlposition befinden, Kühlwasser permanent und zirkulierend mittels eines Ausbringens durch die Sprühbalken 114 in die Wannenbereiche 111 der Abschirmelemente 110 eingebracht bzw. eingeleitet, und strömt dann durch die Ausflussöffnungen 116 nach unten weg, nämlich seitlich an dem Walzband 101 vorbei. Dieses Strömen bzw. Herunterfallen des Kühlwassers seitlich vorbei an dem Walzband 101 wird dadurch gewährleistet, dass die Abschirmelemente 110 jeweils breiter sind als das Walzband 101.

Bevor die Trommelschere 103 für ein Durchtrennen des Walzbandes 101 "in Aktion" gesetzt wird, werden die Abschirmelemente 110 ausgehend von der Kühlposition [K] (vgl. z.B. Fig. 8) in eine sogenannte Schnittposition überführt, die z.B. in der Darstellung von Fig. 10 gezeigt ist und entsprechend mit [S] überschrieben ist. Bei der Bewegung von der Kühlposition [K] in die Schnittposition [S] werden die Abschirmelemente 110 mit ihren Führungszapfen 113 entlang einer Bahnkurve, die durch die bogenförmigen Führungskulissen 109.1, 109.2 der jeweiligen Kulissenführungen 108.1-108.4 definiert wird, bewegt bzw. verschwenkt. Der Verlauf eines solchen Verschwenkens von der Kühlposition [K] in die Schnittposition [S], oder umgekehrt, ist in der Darstellung von Fig. 9 gezeigt, die entsprechend mit "[K-S]" überschrieben ist.

Das Verschwenken der Schutzeinrichtung 105 und deren Abschirmelemente 110 zwischen der Kühlposition [K] und der Schnittposition [S] wird durch geeignete Antriebsmittel erreicht, z.B. durch (nicht gezeigte) Hydraulikzylinder, die jeweils an der Einlaufseite und an der Auslaufseite der Trommelschere 103 angeordnet sind und mit den Abschirmelementen 110 jeweils in Wirkverbindung stehen. In Verbindung mit solchen Hydraulikzylindern können auch Mehrgelenkgetriebe eingesetzt werden, zum Ansteuern der Abschirmelemente 110. Die Aktuierung dieser Hydraulikzylinder, und auch die Zufuhr von Kühlwasser an die Sprühbalken 114, kann durch eine Steuerungseinrichtung 117 gesteuert werden, die in Fig. 1 vereinfacht durch ein Rechteck "117" symbolisiert ist.

Dadurch, dass die durch die jeweiligen bogenförmigen Führungskulissen 109.1, 109.2 definierte Bahnkurve an der Einlaufseite bzw. Auslaufseite der Trommelschere 103 in Bezug zu der daran angrenzenden oberen Messertrommel 102.1 jeweils konvex nach außen, d.h. weg von der oberen Messertrommel 102.1 weist (vgl. Fig. 5), ist gewährleistet, dass beim Verschwenken der Abschirmelemente 110 in Richtung der Schnittposition [S] der Messerkreis MK (vgl. Fig. 8-10) der oberen Messertrommel 102.1 nicht tangiert wird, und insoweit zwischen den Abschirmelementen 110 und der oberen Messertrommel 102.1 keine Berührung stattfindet. Hieraus folgt, dass es zu keiner Zeit zu einer Kollision bzw. Berührung zwischen den Abschirmelementen 110 und der daran angrenzenden oberen Messertrommel 102.1 kommt. Ein stets ausreichender Abstand der Abschirmelemente 110 während eines Verfahrens/Verschwenkens zwischen der Kühlposition [K] und der Schnittposition [S] wird auch durch die gewinkelte Anordnung des Wandbereichs 112 relativ zum Wannenbereich 111 gewährleistet. Das Bewegungsfeld der Messertrommel wird während des Schneidens nicht tangiert.

Sobald die Abschirmelemente 110 die Schnittposition erreicht haben, wie es neben der Fig. 10 auch in der Perspektivansicht von Fig. 4 (= Schnittführung entlang der Linie A-A von Fig. 2) gezeigt ist, können die Messertrommeln 102.1, 102.2 der Trommelschere 103 in Rotation versetzt werden, um das Walzband 101 zu durchtrennen. Diesbezüglich wird ergänzend darauf hingewiesen, dass die Abschirmelemente 110 in der Schnittposition einen ausreichenden Abstand zum Walzband 101 haben, und somit vor ggf. unkontrolliert umherfliegenden Stücken des zerteilten Walzbandes 101 geschützt sind.

Es versteht sich, dass die Zufuhr von Kühlwasser, das in der Kühlposition wie erläutert durch die Sprühbalken 114 ausgebracht und in die Wannenbereiche 111 der Abschirmelemente 110 eingeleitet wird, gestoppt wird, bevor die Abschirmelemente 110 ausgehend von der Kühlposition [K] in die Schnittposition [S] verschwenkt werden. Die Abschirmelemente 110 werden erst dann aus der Kühlposition [K] heraus geschwenkt und voneinander wegbewegt, nachdem das gesamte Kühlwasser aus den Wannenbereichen 111 nach - unten durch die Ausflussöffnungen 116, seitlich an dem Walzband 101 vorbei, ausgetreten ist. Damit wird verhindert, dass Kühlwasser beim Verschwenken der Abschirmelemente 110 in die Schnittposition [S] auf das Walzband 101 gelangt.

Nach Abschluss eines Schneidvorgangs, wenn der Walzvorgang für das Walzband 101 in gewohnter Weise fortgesetzt und die Trommelschere 103 wieder in Stillstand versetzt wird, werden die Abschirmelemente 110 von der Schnittposition [S] zurück in die Kühlposition [K] verschwenkt, gemäß einer Abfolge der Fig. 10, Fig. 9 und Fig. 8. Nachdem die Abschirmelemente 110 die Kühlposition [K] erreicht haben, wird erneut Kühlwasser durch die Sprühbalken 114 gespritzt, so dass das Kühlwasser in die Wannenbereiche 111 gelangt.

Die vorstehend erläuterte Vorrichtung eignet sich insbesondere zur Kühlung der oberen Messertrommel 102.1 einer Trommelschere 103, wenn daran insgesamt drei Messer M (vgl. Fig. 8 - Fig. 10) angebracht sind.

Wie bereits an anderer Stelle erläutert, ist optional auch die Kühlung bzw. Abschirmung der unteren Messertrommel 102.2 möglich, indem eine weitere (nicht gezeigte) Schutzeinrichtung beim Stillstand der Trommelschere 103 in den Raum zwischen dem Walzband 101 und der unteren Messertrommel 102.2 eingebracht wird. Eine solche weitere Schutzeinrichtung zur Abschirmung der unteren Messertrommel 102.2 kann ebenfalls in Form von zwei separaten Abschirmelementen ausgebildet sein, die entlang der in einer jeweiligen Kulissenführung ausgebildeten Führungskulissen (vgl. unterer Bereich von Fig. 5: dort mit dem Pfeil "U" angedeutet) beweglich geführt sind und somit - in gleicher Weise wie die Abschirmelemente 110 für die obere Messertrommel 102.1 - auf einer Bahnkurve zwischen der Kühlposition und der Schnittposition verschwenkt werden können.

In Ergänzung zu der in der Zeichnung gezeigten Ausführungsform ist es auch möglich, die erfindungsgemäße Vorrichtung 100 auch bei einer Trommelschere einzusetzen, die pro Messertrommel lediglich mit zwei Messern bestückt ist.

Gleichermaßen kann die Erfindung auch an anderen Querteilscheren, z.B. Torscheren, Kurbelscheren, etc. eingesetzt werden.

### Bezugszeichenliste

- 100: Vorrichtung
- 101: Walzband
- 102.1 /102.2: obere /untere Messertrommel als messertragendes Element
- 103: Trommelschere
- 104: Ständergerüst (der Trommelschere 103)
- 105: Schutzeinrichtung
- 106: Führungseinrichtung
- 108.1-108.4: Kulissenführung(en)
- 109.1: erste bogenförmige Führungskulisse
- 109.2: zweite bogenförmige Führungskulisse
- 110: Abschirmelement(e)
- 111: Wannenbereich (eines Abschirmelements 110)
- 112: Wandbereich (eines Abschirmelements 110)
- 113: Führungszapfen
- 114: Kühlmittelzufuhreinrichtung / Sprühbalken
- 115: Seitenrand (eines Abschirmelements 110)
- 116: Ausflussöffnung (an bzw. in einem Wannenbereich 111)
- 117: Steuerungseinrichtung
- [K]: Kühlposition
- [K-S]: Übergang von Kühlposition zur Schnittposition, und umgekehrt
- M: Messer
- MK: Bewegungsfeld /Messerkreis (einer Messertrommel 102.1, 102.2),
- [S]: Schnittposition
- T: Transportrichtung des Walzbandes 101/Bandlaufrichtung

### Bezugszeichenliste

- 100: Vorrichtung
- 101: Walzband
- 102.1 /102.2: obere /untere Messertrommel als messertragendes Element
- 103: Trommelschere
- 104: Ständergerüst (der Trommelschere 103)
- 105: Schutzeinrichtung
- 106: Führungseinrichtung
- 108.1-108.4: Kulissenführung(en)
- 109.1: erste bogenförmige Führungskulisse
- 109.2: zweite bogenförmige Führungskulisse
- 110: Abschirmelement(e)
- 111: Wannenbereich (eines Abschirmelements 110)
- 112: Wandbereich (eines Abschirmelements 110)
- 113: Führungszapfen
- 114: Kühlmittelzufuhreinrichtung / Sprühbalken
- 115: Seitenrand (eines Abschirmelements 110)
- 116: Ausflussöffnung (an bzw. in einem Wannenbereich 111)
- 117: Steuerungseinrichtung
- [K]: Kühlposition
- [K-S]: Übergang von Kühlposition zur Schnittposition, und umgekehrt
- M: Messer
- MK: Bewegungsfeld /Messerkreis (einer Messertrommel 102.1, 102.2),
- [S]: Schnittposition
- T: Transportrichtung des Walzbandes 101/Bandlaufrichtung

## Patentansprüche

1. Vorrichtung (100) zum Kühlen zumindest eines messertragenden Elements (102.1, 102.2) einer Querteilschere (103), die in einem Walzwerk, insbesondere in einem Warmwalzwerk installiert ist, umfassend
eine Schutzeinrichtung (105), und
eine Führungseinrichtung (106), an der die Schutzeinrichtung (105) beweglich geführt und dadurch zwischen einer Kühlposition (K) und einer Schnittposition (S) verfahrbar ist,
wobei die Schutzeinrichtung (105) in der Kühlposition (K) zwischen einem messertragenden Element (102.1, 102.2) und einem kontinuierlich durch das Walzwerk laufenden Walzband (101) positioniert ist, so dass eine dem Walzband (101) gegenüberliegende Seite des messertragenden Elements (102.1, 102.2) durch die Schutzeinrichtung (105) abgeschirmt ist, und
wobei die Schutzeinrichtung (105) in der Schnittposition (S) von einem Bewegungsfeld (MK) des messertragenden Elements (102.1, 102.2) beabstandet ist, so dass bei Bewegung des messertragenden Elements (102.1, 102.2) bzw. beim Durchtrennen des Walzbandes (101) die Schutzeinrichtung (105) von diesem messertragenden Element (102.1, 102.2) nicht berührt wird,
**dadurch gekennzeichnet,**
**dass** die Führungseinrichtung (106) in Form von Kulissenführungen (108.1 - 108.4) ausgebildet ist, die beiderseits des Walzbandes (101) angeordnet sind, wobei die Schutzeinrichtung (105) mit ihren beiden Stirnseiten an den Kulissenführungen (108.1 - 108.4) beweglich geführt ist, wobei die Kulissenführungen (108.1 - 108.4) an den Innenseiten der seitlichen Ständergerüste (104) der Querteilschere (103) angebracht sind, und
**dass** in den Kulissenführungen (108.1 - 108.4) jeweils eine erste bogenförmige Führungskulisse (109.1) und eine zweite bogenförmige Führungskulisse (109.2) ausgebildet sind, wobei eine Bahnkurve, die durch die bogenförmigen Führungskulissen (109.1, 109.2) definiert wird, in Bezug auf eine angrenzende Messertrommel (102.1, 102.2) konvex nach außen weist, wobei die Führungskulissen (109.1, 109.2) in einer Kulissenführung (108.1 - 108.4) teilweise überlappend angeordnet sind.

2. Vorrichtung (100) nach Anspruch 1, **dadurch gekennzeichnet, dass** eine Breite der Schutzeinrichtung (105) quer zur Transportrichtung (T) des Walzbandes (101) zumindest mit einer Breite des messertragenden Elements (102.1, 102.2) übereinstimmt, vorzugsweise, dass die Breite der Schutzeinrichtung (105) größer ist als die Breite des messertragenden Elements (102.1, 102.2).

3. Vorrichtung (100) nach Anspruch 1 oder 2, **gekennzeichnet durch** eine Antriebseinrichtung, die in Wirkverbindung mit der Schutzeinrichtung (105) steht, um diese entlang der Führungseinrichtung (106) in die Kühlposition (K) oder in die Schnittposition (S) zu bewegen, vorzugsweise, dass die Antriebseinrichtung einen Elektromotor oder einen Hydraulikzylinder aufweist, der mit der Schutzeinrichtung (105) wirkverbunden ist, um die Schutzeinrichtung (105) entlang der Führungseinrichtung (106) in die Kühlposition (K) oder in die Schnittposition (S) zu bewegen,

4. Vorrichtung nach Anspruch 3, **dadurch gekennzeichnet, dass** die Antriebseinrichtung einen Vier- oder Mehrgelenktrieb aufweist, durch den die Antriebseinrichtung mit der Schutzeinrichtung (105) gekoppelt ist

5. Vorrichtung (100) nach einem der vorhergehenden Ansprüche, **dadurch gekennzeichnet, dass** die Schutzeinrichtung (105) zweiteilig ausgebildet ist und zwei Abschirmelemente (110) umfasst, die - von der Einlaufseite des Walzbandes (101) und von der Auslaufseite des Walzbandes (101) in die bzw. aus der Querteilschere (103) gesehen - zum Überführen in die Kühlposition (K) spiegelbildlich in die Ein- bzw. Auslaufseite bewegbar sind, derart, dass die Abschirmelemente (110) in der Kühlposition (K) angrenzend zueinander positioniert sind und dadurch eine dem Walzband (101) gegenüberliegende Seite des messertragenden Elements (102.1, 102.2) gegenüber dem Walzband (101) abschirmen.

6. Vorrichtung (100) nach Anspruch 5, **dadurch gekennzeichnet, dass** ein Abschirmelement (110) jeweils einen Wannenbereich (111) und einen Wandbereich (112) aufweist, wobei der Wandbereich (112) relativ zum Wannenbereich (111) im Querschnitt längs der Breite des Walzbandes (101) in einem Winkel angeordnet ist.

7. Vorrichtung (100) nach Anspruch 6, **dadurch gekennzeichnet, dass** an den Seitenrändern (115) eines Abschirmelements (110) sowohl angrenzend zum Wannenbereich (111) als auch angrenzend zum Wandbereich (112) jeweils seitliche Führungszapfen (113) angebracht sind, die in Eingriff mit den bogenförmigen Führungskulissen (109.1, 109.2) sind.

8. Vorrichtung (100) nach einem der vorhergehenden Ansprüche, **dadurch gekennzeichnet, dass** die Schutzeinrichtung (105) in der Kühlposition (K) zwischen einem oberen messertragenden Element (102.1) der Querteilschere (103) und dem kontinuierlich durch das Walzwerk laufenden Walzband (101) positioniert ist, so dass die untere Seite des oberen messertragenden Elements (102.1) gegenüber dem Walzband (101) von der Schutzeinrichtung (105) abgeschirmt wird.

9. Vorrichtung (100) nach Anspruch 8 soweit rückbezogen auf Anspruch 6 oder 7, **dadurch gekennzeichnet, dass** eine Kühlmittelzufuhreinrichtung (114) vorgesehen ist, mittels der Kühlwasser von oben in die Wannenbereiche (111) der Abschirmelemente (110) einbringbar ist, vorzugsweise, dass an einem Seitenrand des Wannenbereiche (111) eines Abschirmelements (110) zumindest eine Ausflussöffnung (116) ausgebildet ist, durch die das Kühlmittel gezielt nach unten austreten kann.

10. Vorrichtung nach einem der vorhergehenden Ansprüche, **dadurch gekennzeichnet, dass** es sich bei der Querteilschere (103) um eine Trommelschere handelt, wobei ein messertragendes Element als Messertrommel der Trommelschere ausgebildet ist.

11. Vorrichtung nach einem der Ansprüche 1 bis 9, **dadurch gekennzeichnet, dass** es sich bei der Querteilschere (103) um eine Torschere handelt.

12. Vorrichtung nach einem der Ansprüche 1 bis 9, **dadurch gekennzeichnet, dass** es sich bei der Querteilschere (103) um eine Kurbelschere handelt.

13. Verfahren zum Kühlen eines messertragenden Elements (102.1, 102.2) einer Querteilschere (103), die in einem Walzwerk, insbesondere in einem Warmwalzwerk installiert ist, wobei im Stillstand der Querteilschere (103) zumindest eine Schutzeinrichtung (105) zwischen einem messertragenden Element (102.1) der Querteilschere (103) und einem kontinuierlich durch das Walzwerk laufenden Walzband (101) in einer Kühlposition (K) positioniert wird, so dass eine dem Walzband (101) gegenüberliegende Seite dieses messertragenden Elements (102.1) durch die Schutzeinrichtung (105) abgeschirmt ist,
wobei die Schutzeinrichtung (105) zweiteilig ausgebildet ist und zwei Abschirmelemente (110) umfasst, die von der Einlaufseite des Walzbandes (101) und von der Auslaufseite des Walzbandes (101) spiegelbildlich in die Kühlposition (K) gebracht werden, in der die Abschirmelemente (110) angrenzend zueinander positioniert sind und dadurch eine Unterseite des oberen messertragenden Elements (102.1) gegenüber dem Walzband (101) abschirmen,
**dadurch gekennzeichnet,**
**dass** die Schutzeinrichtung (105) zwischen einem oberen messertragenden Element (102.1) der Querteilschere (103) und dem kontinuierlich durch das Walzwerk laufenden Walzband (101) positioniert wird,
**dass** die Abschirmelemente (110) jeweils einen Wannenbereich (111) aufweisen, wobei - wenn sich die Abschirmelemente (110) in der Kühlposition (K) befinden - Kühlwasser in diese Wannenbereiche (111) eingeleitet wird, und
**dass** - solange sich die Abschirmelemente (110) in der Kühlposition (K) befinden - Kühlwasser permanent in die Wannenbereiche (111) der Abschirmelemente eingeleitet wird, wobei das Kühlwasser - wenn die Wannenbereiche (111) voll mit Kühlwasser geflutet sind - über Seitenränder (115) der Wannenbereiche (111) überläuft und nach unten an dem Walzband (101) seitlich vorbeiströmt.

## Claims

1. Device (100) for cooling at least knife-carrying element (102.1, 102.2) of cut-to-length shears (103) installed in a rolling mill, particularly in a hot-strip rolling mill, comprising
a protective device (105) and
a guide device (106) at which the protective device (105) is guided to be movable and is thereby able to be moved between a cooling position (K) and a cutting position (S),
wherein the protective device (105) in the cooling position (K) is positioned between a knife-carrying element (102.1, 102.2) and a rolled strip (101), which continuously runs through the rolling mill, so that a side, which is opposite the rolled strip (101), of the knife-carrying element (102.1, 102.2) is screened by the protective device (105), and
wherein the protective device (105) in the cutting position (S) is spaced from a movement field (MK) of the knife-carrying element (102.1, 102.2) so that on movement of the knife-carrying element (102.1, 102.2) or on cutting through the rolled strip (101) the protective device (105) is not contacted by this knife-carrying element (102.1, 102.2), **characterised in that**
the guide device (106) is constructed in the form of gate guides (108.1 - 108.4) arranged on either side of the rolled strip (1), wherein the protective device (105) is movably guided by its two ends at the gate guides (108.1 - 108.4), wherein the gate guides (108.1- 108.4) are mounted at the inner sides of the lateral support stands (104) of the cut-to-length shears (103) and
a respective first curved guide gate (109.1) and second curved guide gate (109.2) are formed in the gate guides (108.1 - 108.4), wherein a track curve, which is defined by the curved guide gates (109.1, 109.2), faces convexly outwardly with respect to an adjacent knife drum (102.1, 102.2) and wherein the guide gates (109.1, 109.2) are arranged in a gate guide (108.1 - 108.4) to be partly overlapping.

2. Device (100) according to claim 1, **characterised in that** a width of the protective device (105) transversely to the transport direction (T) of the rolled strip (101) corresponds at least with a width of the knife-carrying element (102.1, 102.2), preferably **in that** width of the protective device (105) is greater than the width of the knife-carrying element (102.1, 102.2).

3. Device (100) according to claim 1 or 2, **characterised by** a drive device which is in operative connection with the protective device (105) so as to move this along the guide device (106) into the cooling position (K) or into the cutting position (S), preferably in that the drive device comprises an electric motor or a hydraulic cylinder operatively connected with the protective device (105) so as to move the protective device (105) along the guide device (106) into the cooling position (K) or into the cutting position (S).

4. Device (100) according to claim 3, **characterised in that** the drive device comprises a four-bar or multi-bar drive by which the drive device is coupled to the protective device (105).

5. Device (100) according to any one of the preceding claims, **characterised in that** the protective device (105) is of two-part construction and comprises two screening elements (110) which - as seen from the inlet side of the rolled strip (101) and from the outlet side of the rolled strip (101) respectively into or out of the cut-to-length shears (103) - are movable in mirror image into the inlet side or outlet side in such a way for transfer to the cooling position (K) that the screening elements (110) are positioned adjacent to one another in the cooling position (K) and thereby screen a side, which is opposite the rolled strip (101), of the knife-carrying element (102.1, 102.2) from the rolled strip (101).

6. Device (100) according to claim 5, **characterised in that** each screening element (110) has a trough region (111) and wall region (112), wherein in cross-section along the width of the rolled strip (101) the wall region (112) is arranged at an angle relative to the trough region (111).

7. Device (100) according to claim 6, **characterised in that** lateral guide pins (113) in engagement with the curved guide gates (109.1, 109.2) are respectively mounted at the side edges (115) of a screening element (110) not only adjacent to the trough region (111), but also adjacent to the wall region (112).

8. Device (100) according to any one of the preceding claims, **characterised in that** the protective device (105) in the cooling position (K) is positioned between an upper knife-carrying element (102.1) of the cut-to-length shears (103) and the rolled strip (101) continuously running through the rolling mill so that the lower side of the upper knife-carrying element (102.1) is screened by the protective device (105) from the rolled strip (101).

9. Device (100) according to claim 8 when dependent on claim 6 or 7, **characterised in that** a coolant feed device (114) by means of which cooling water can be introduced from above into the trough regions (111) of the screening elements (11) is provided, preferably in that at least one outflow opening (116) through which the coolant can issue downwardly in targeted manner is formed at a side wall of the trough regions (111) of a screening element (110).

10. Device (100) according to any one of the preceding claims, **characterised in that** the cut-to-length shears (103) are drum shears, wherein a knife-carrying element is constructed as a knife drum of the drum shears.

11. Device (100) according to any one of claims 1 to 9, **characterised in that** the cut-to-length shears (103) are gate shears.

12. Device (100) according to any one of claims 1 to 9, **characterised in that** the cut-to-length shears (103) are crank shears.

13. Method of cooling a knife-carrying element (102.1, 102.2) of cut-to-length shears (103) installed in a rolling mill, particularly a hot-strip rolling mill, wherein at standstill of the cut-to-length shears (103) at least one protective device (105) is positioned in a cooling position (K) between a knife-carrying element (102.1) of the cut-to-length shears (103) and a rolled strip (101), which is continuously running through the rolling mill, so that a side, which is opposite the rolled strip (101), of this knife-carrying element (102.1) is screened by the protective device (105),
wherein the protective device (105) is of two-part construction and comprises two screening elements (110) which are brought from the inlet side of the rolled strip (101) and from the outlet side of the rolled strip (101) in mirror image into the cooling position (K) in which the screening elements (110) are positioned adjacent to one another and thereby screen a lower side of the upper knife-carrying element (102.1) from the rolled strip (101),
**characterised in that**
the protective device (105) is positioned between an upper knife-carrying element (102.1) of the cut-to-length shears (103) and the rolled strip (101) continuously running through the rolling mill,
the screening elements (110) each have a trough region (111), wherein cooling water is conducted into these trough regions (111) when the screening elements (110) are in the cooling position (K) and
as long as the screening elements (11) are in the cooling position (K) cooling water is permanently conducted into the trough regions (111) of the screening elements, wherein when the trough regions (111) are completely flooded with cooling water the cooling water overflows side edges (115) of the trough regions (111) and flows downwards laterally past the rolled strip (101).

## Revendications

1. Dispositif (100) pour refroidir au moins un élément porteur de lame (102.1, 102.2) d'une cisaille transversale (103), installée dans une installation de laminage, en particulier dans une installation de laminage à chaud, comprenant
un dispositif de protection (105), et
un dispositif de guidage (106), sur lequel le dispositif de protection (105) est guidé de manière mobile et par conséquent déplaçable entre une position de refroidissement (K) et une position de coupe (S),
dans lequel le dispositif de protection (105) est positionné dans la position de refroidissement (K) entre un élément porteur de lame (102.1, 102.2) et une bande de laminage (101) passant continuellement à travers l'installation de laminage, de sorte qu'un côté de l'élément porteur de lame (102.1, 102.2) opposé à la bande de laminage (101) est protégé par le dispositif de protection (105), et
dans lequel le dispositif de protection (105) est éloigné dans la position de coupe (S) d'un champ de mouvement (MK) de l'élément porteur de lame (102.1, 102.2), de sorte que lors du mouvement de l'élément porteur de lame (102.1, 102.2) ou lors de la coupe de la bande de laminage (101), le dispositif de protection (105) n'est pas touché par cet élément porteur de lame (102.1, 102.2),
**caractérisé**
**en ce que** le dispositif de guidage (106) est formé de guides à coulisse (108.1 - 108.4) disposés des deux côtés de la bande de laminage (101), dans lequel le dispositif de protection (105) est guidé de manière mobile sur ses deux faces frontales par les guides à coulisse (108.1 - 108.4), les guides à coulisse (108.1 - 108.4) étant fixés sur les faces intérieures des cadres latéraux (104) de la cisaille transversale (103), et
**en ce que** dans chacun des guides à coulisse (108.1 - 108.4), une première coulisse de guidage arquée (109.1) et une seconde coulisse de guidage arquée (109.2) sont formées, où une trajectoire définie par les coulisses de guidage arquées (109.1, 109.2) pointe vers l'extérieur de manière convexe par rapport à un tambour de lame adjacent (102.1, 102.2), les coulisses de guidage (109.1, 109.2) étant disposées partiellement en chevauchement dans un guide à coulisse (108.1 - 108.4).

2. Dispositif (100) selon la revendication 1, **caractérisé en ce que** la largeur du dispositif de protection (105) transversalement à la direction de transport (T) de la bande de laminage (101) correspond au moins à la largeur de l'élément porteur de lame (102.1, 102.2), de préférence, **en ce que** la largeur du dispositif de protection (105) est plus grande que la largeur de l'élément porteur de lame (102.1, 102.2).

3. Dispositif (100) selon la revendication 1 ou 2, **caractérisé par** un dispositif d'entraînement, qui est en interaction avec le dispositif de protection (105), pour le déplacer le long du dispositif de guidage (106) dans la position de refroidissement (K) ou dans la position de coupe (S), de préférence, **en ce que** le dispositif d'entraînement comprend un moteur électrique ou un vérin hydraulique, qui est en interaction avec le dispositif de protection (105), pour déplacer le dispositif de protection (105) le long du dispositif de guidage (106) dans la position de refroidissement (K) ou dans la position de coupe (S).

4. Dispositif selon la revendication 3, **caractérisé en ce que** le dispositif d'entraînement comprend un entraînement à quatre articulations ou plus, par lequel le dispositif d'entraînement est couplé au dispositif de protection (105).

5. Dispositif (100) selon l'une des revendications précédentes, **caractérisé en ce que** le dispositif de protection (105) est constitué de deux parties et comprend deux éléments de blindage (110), qui - vus de la côté d'entrée de la bande de laminage (101) et du côté de sortie de la bande de laminage (101) dans resp. hors de la cisaille transversale (103) - sont déplaçables de manière symétrique dans la position de refroidissement (K) vers le côté d'entrée resp. de sortie, de telle manière que les éléments de blindage (110) sont positionnés adjacents l'un à l'autre dans la position de refroidissement (K) et protègent ainsi un côté de l'élément porteur de lame (102.1, 102.2) opposé à la bande de laminage (101) vis-à-vis de la bande de laminage (101).

6. Dispositif (100) selon la revendication 5, **caractérisé en ce qu**'un élément de blindage (110) comprend une zone de cuvette (111) et une zone de paroi (112), la zone de paroi (112) étant disposée en angle par rapport à la zone de cuvette (111) dans la section transversale le long de la largeur de la bande de laminage (101).

7. Dispositif (100) selon la revendication 6, **caractérisé en ce que** sur les bords latéraux (115) d'un élément de blindage (110), des broches de guidage latérales (113) sont fixées, à la fois adjacentes à la zone de cuvette (111) et à la zone de paroi (112), qui sont en prise avec les coulisses de guidage arquées (109.1, 109.2).

8. Dispositif (100) selon l'une des revendications précédentes, **caractérisé en ce que** le dispositif de protection (105) est positionné dans la position de refroidissement (K) entre un élément porteur de lame supérieur (102.1) de la cisaille transversale (103) et la bande de laminage (101) passant continuellement à travers l'installation de laminage, de sorte que le côté inférieur de l'élément porteur de lame supérieur (102.1) est protégé par le dispositif de protection (105) vis-à-vis de la bande de laminage (101).

9. Dispositif (100) selon la revendication 8 en tant que dépendante de la revendication 6 ou 7, **caractérisé en ce qu**'un dispositif d'alimentation en agent de refroidissement (114) est prévu, par lequel de l'eau de refroidissement peut être introduite par le haut dans les zones de cuvette (111) des éléments de blindage (110), de préférence, **en ce qu**'au moins une ouverture de sortie (116) est formée sur un bord latéral des zones de cuvette (111) d'un élément de blindage (110), à travers laquelle l'agent de refroidissement peut s'écouler vers le bas de manière ciblée.

10. Dispositif selon l'une des revendications précédentes, **caractérisé en ce que** la cisaille transversale (103) est une cisaille à tambour, où un élément porteur de lame est formé comme un tambour de lame de la cisaille à tambour.

11. Dispositif selon l'une des revendications 1 à 9, **caractérisé en ce que** la cisaille transversale (103) est une cisaille à portail.

12. Dispositif selon l'une des revendications 1 à 9, **caractérisé en ce que** la cisaille transversale (103) est une cisaille à manivelle.

13. Procédure de refroidissement d'un élément porteur de lame (102.1, 102.2) d'une cisaille transversale (103), installée dans une installation de laminage, en particulier dans une installation de laminage à chaud, où, lorsque la cisaille transversale (103) est à l'arrêt, au moins un dispositif de protection (105) est positionné entre un élément porteur de lame (102.1) de la cisaille transversale (103) et une bande de laminage (101) circulant en continu à travers l'installation de laminage dans une position de refroidissement (K), de sorte qu'un côté de cet élément porteur de lame (102.1) opposé à la bande de laminage (101) est protégé par le dispositif de protection (105),
le dispositif de protection (105) étant constitué de deux parties et comprenant deux éléments de blindage (110) qui, du côté d'entrée de la bande de laminage (101) et du côté de sortie de la bande de laminage (101), sont amenés de manière symétrique dans la position de refroidissement (K), où les éléments de blindage (110) sont positionnés adjacents l'un à l'autre et protègent ainsi la face inférieure de l'élément porteur de lame supérieur (102.1) vis-à-vis de la bande de laminage (101),
**caractérisée**
**en ce que** le dispositif de protection (105) est positionné entre un élément porteur de lame supérieur (102.1) de la cisaille transversale (103) et la bande de laminage (101) circulant en continu à travers l'installation de laminage,
**en ce que** les éléments de blindage (110) comportent chacun une zone de cuvette (111), où - lorsque les éléments de blindage (110) se trouvent dans la position de refroidissement (K) - de l'eau de refroidissement est introduite dans ces zones de cuvette (111), et
**en ce que** - tant que les éléments de blindage (110) se trouvent dans la position de refroidissement (K) - de l'eau de refroidissement est introduite en permanence dans les zones de cuvette (111) des éléments de blindage, et - lorsque les zones de cuvette (111) sont pleines d'eau de refroidissement - l'eau de refroidissement déborde par les bords latéraux (115) des zones de cuvette (111) et s'écoule vers le bas le long des côtés de la bande de laminage (101).
